# EUROPEAN PATENT SPECIFICATION

(11) **EP 1 247 856 B1**
(45) Date of publication and mention of the grant of the patent: **16.09.2009**
(21) Application number: 01810437.2
(22) Date of filing: 03.05.2001
(51) Int. Cl.: C09K 3/32, C02F 1/68, C02F 1/28, B01J 20/32, B01J 20/20, B01D 39/00, C01B 31/02

(54) **Method for removing oil, petroleum products and/or chemical pollutants from liquid and/or gas and/or surface**
Verfahren zur Enfernung von Öl, petroleumhaltigen Produkten und/oder chemischen Verunreinigungen aus einer Flüssigkeit und/oder aus einem Gas und/oder von einer Oberfläche
Procédé d'élimination d'huiles, de polluants pétroliers et/ou chimiques contenus dans des liquides et/ou contenus dans du gaz et/ou en surface

(30) Priority: 02.04.2001 RU 2001108456
(43) Date of publication of application: 09.10.2002
(73) Proprietor: Petrik, Viktor Ivanovich, St. Petersburg, 195426 (RU)
(72) Inventor: Petrik, Viktor Ivanovich, St. Petersburg, 195426 (RU)
(74) Representative: Somervell, Thomas Richard

(56) References cited:
- EP-A- 0 456 326
- EP-A- 0 457 977
- EP-A- 0 691 113
- WO-A-97/32571
- DE-A- 3 244 093
- DE-A- 3 842 994
- DE-A- 4 204 560
- FR-A- 2 469 134
- DATABASE WPI Section Ch, Week 200130 Derwent Publications Ltd., London, GB; Class D15, AN 2001-289124 XP002204559 & RU 2 163 840 C (PETRIK V I), 10 March 2001 (2001-03-10)
- DATABASE WPI Section Ch, Week 200020 Derwent Publications Ltd., London, GB; Class H03, AN 2000-236124 XP002204560 & RU 2 123 086 C (PETRI V I), 10 December 1998 (1998-12-10)
- DATABASE WPI Section Ch, Week 200130 Derwent Publications Ltd., London, GB; Class E36, AN 2001-289155 XP002204561 & RU 2 163 883 C (PETRIK V I), 10 March 2001 (2001-03-10)
- DATABASE WPI Section PQ, Week 199410 Derwent Publications Ltd., London, GB; Class Q51, AN 1994-081149 XP002204562 & RU 2 002 970 C (ZUDIN I A), 15 November 1993 (1993-11-15)
- PATENT ABSTRACTS OF JAPAN vol. 016, no. 351 (C-0968), 29 July 1992 (1992-07-29) & JP 04 108342 A (TOSOH CORP;OTHERS: 01), 9 April 1992 (1992-04-09)

## Description

The invention relates to the field of ecology, in particular to the struggle against pollution of the environment with oil, petroleum products, cyclic and aromatic hydrocarbons, other chemical pollutants, i.e. to purification of a water area, waste waters, industrial machinery, polluted soil and ground, etc., and also to the field of objects used to satisfy the vital requirements of humans and to medicine.

Known are methods for removing different chemical pollutants from different mediums, for example, methods for purifying water and solid surfaces with the use of a "Primesorb" absorbent (U.S.A.). These are sorption processes with the use of an expensive substance having low absorbing capability.

As a rule, the known methods for removing chemical pollutants serve for the achievement of a concrete narrow object relating to purification of either a liquid or a gas or a solid surface.

For example, a method is known for removing an oil film from the surface of water, the method including a closed system of forming a sorbing material (particles of carbon linked by polyethylene), which is on board a ship, dispersing the sorbing material over the surface of the water and collecting it after sorption of the oil (patent US 37831296, class E 02 B 15/04, 1974). Drawbacks of this method are the length of the process of sorbing oil and its low sorbing capability (about 75%), which does not make it possible to have an amount of sorbent on board the ship sufficient to purify large water surfaces. Furthermore, the method is not meant for removing oil and petroleum products from land surfaces.

Also known is the removal of hydrocarbon chemical pollutants from water with the use of a filter on a carbon base ("Some Aspects of Technology of Preparing Drinking Water," edited by Prof. V.F. Olontsev, Perm, AES RF, 1997, pp. 33-38). A drawback of such a method is the insufficient effectiveness of water purification.

The use of activated carbon for making filters for tobacco goods is known (application FR No. 2469134, class A 24 D 3/16, 29 May 1981). Activated carbon is used as the substance which detains the nitrogen oxide contained in tobacco smoke. In addition to nitrogen oxide, filters with use of activated carbon (for example. Philip Morris combined filters) also detain nicotine, 3,4 benzopyrene, aromatic hydrocarbons, However, the content of the indicated substances in the case of use of activated carbon cannot be reduced to a level providing a sufficient protective effect.

All the known methods are means for removal of a certain type of pollutants from the medium being purified and do not have a wide spectrum of action, which limits the possibility of their use and does not ensure that the medium is purified of chemical pollutants to a sufficient degree.

A method for removing chemical pollutants is known, in particular, by collecting spilled oil and petroleum products, including preparing a carbonaceous mixture of high reaction capability (CMHR), placing the CMHR in a polluted medium by dispersing the CMHR over the surface and/or into the body of the water contaminated by spilled oil or petroleum products, and collecting the CMHR after saturation with (addition to) the oil or petroleum products (patent RU No. 2123086, class E 02 B 15/04, 10 December 1998). In this method the CMHR is prepared from natural graphite processed with acid, by resistance heating. Preparation of the CMHR may be carried out on the ship - collector of the oil. This method is substantially more effective, but the power consumption is relatively high and the presence of complex equipment for production of the CMHR is required.

Furthermore, the effectiveness of the removal is not high enough to provide the possibility for removal of a wide spectrum of chemical pollutants from the contaminated medium. Furthermore, as a rule, sorbents are for one-shot use.

RU 2163840 discloses another method for removing chemical pollutants using a carbonaceous mixture of a graphite containing feedstock.

According to the present invention there is provided a method for removing chemical pollutants as defined in claim 1 below.

The technical object of the invention is to enhance the effectiveness of the removal of oil and petroleum products, and also to provide for the removal of other chemical pollutants as a result of the presence of a mixture of carbon nanocrystals (carbonaceous nanotubes) in the composition, which have a high absorbing capability in respect to different chemical substances and compounds, in an amount sufficient for the effective removal of pollutants. Furthermore, the possibility for repeated use of the carbonaceous mixture is provided.

The stated object is achieved in a method for removing chemical pollutants, comprising preparing a carbonaceous mixture of a graphite-containing feedstock, placing the carbonaceous mixture in a contaminated medium and collecting the carbonaceous mixture saturated with pollutants; placing the carbonaceous mixture in the contaminated medium is carried out by dispersing onto a surface and/or into a liquid and/or by placing on a surface and/or by passing a liquid or a gas through a filter, and a mixture of expanded graphite and carbonaceous nanocrystals is used as the carbonaceous mixture, wherein the content of the carbonaceous nanocrystals in the mixture is not less than 10%.

Wherein the nanocrystals are nanotubes having a size of 1-10 nm, with added thereto free C, C₂, C₃, C₄, C₅ radicals, and/or radicals in the form of one or several connected hexagonals and/or hexagonals with added thereto radicals of the type C, C₂, C₃, C₄, and C₅.

The preparation of the carbonaceous mixture is carried out by chemical processing of the graphite-containing feedstock with at least one halogen-oxygen compound having the formula MXOn, where M is one of the chemical substances of the row: H, NH4, Na, K; X is one of the chemical substances of the row: Cl, Br, 1; and n = 1-4, and subsequent external action resulting in exothermal explosive-like decomposition of the processed graphite-containing stock with subsequent initiation of an autocatalytic breakdown process, wherein application of the action is carried out at normal pressure and room temperature.

Wherein the external action is carried out by photochemical or electrochemical or mechanical or thermochemical or sonochemical or direct chemical action.

Either natural flaked graphite or graphite in the form of powder is used as the graphite-containing feedstock.

In order to provide the optimum mode of preparation of the carbonaceous mixture, the weight ratio of the graphite-containing feedstock to the halogen-oxygen compound is taken equal to 2:1.

When the collection of the spilled oil, petroleum products and other hydrocarbon pollutants is from the surface of water, the carbonaceous mixture may be prepared on the ship collecting the oil or on shore.

After collecting the carbonaceous mixture of expanded graphite and carbonaceous nanocrystals, which is saturated with chemical pollutants, the collected hydrocarbon pollutants may be removed from the carbonaceous mixture by the compression method (with the use of a press).

The carbonaceous mixture of expanded graphite and carbonaceous nanocrystals may be used again.

In particular, the method of removing chemical pollutants is used for the collection of oil and petroleum products from the surface of water, wherein preparation of the carbonaceous mixture of expanded graphite and carbonaceous nanocrystals is carried out on the ship-collector of the oil or on shore, and the placing of the carbonaceous mixture of expanded graphite and carbonaceous nanocrystals on the surface of water is carried out by dispersal into the body of the water and/or onto the surface of the water and/or by the placement of floating barriers on the surface of the water.

The method For removing chemical pollutants is also used for filtration of drinking water comprising chemical pollutants, including hydrocarbon compounds, with the use of a filter made of a carbonaceous mixture of expanded graphite and carbonaceous nanocrystals.

Furthermore, the method for removing chemical pollutants is used to purify industrial discharges

Furthermore, the method for removing chemical pollutants is used for the removal of light fractions of petroleum products or gaseous condensate from free spaces of storage reservoirs

Furthermore, the method for removing chemical pollutants is used for neutralization of exhaust gases of internal combustion engines as the base of a matrix of a neutralizer of exhaust gases.

Furthermore, the method for removing chemical pollutants is used as a filter for cigarettes for filtration of cigarette smoke.

In the field of medicine the method for removing chemical pollutants is used for purification of blood plasma.

The method for removing chemical pollutants, is also used in the field of medicine for external application in cases of skin integument diseases which are characterized by discharge, in particular in the case of burns and purulent wounds, wherein placement on the skin integument is accomplished by the application of a bandage with a carbonaceous mixture.

The method for removing chemical pollutants is based on preparing a carbonaceous mixture having a huge reactive and sorption capability in respect to any hydrocarbon compounds, other chemical compounds, metal ions. Such properties of the carbonaceous mixture are due to the presence of nanocrystals of carbon in the form of nanotubes having a size of 1-10 nm and a large degree of disorder, and to the fact that during the preparation of a mixture of natural flaked graphite or graphite in the form of powder or another graphite-containing raw material, not only stratification of crystallites into separate packets of basal planes, as in known methods of preparing expanded graphite, but also breakage of interhexagonal covalent links take place. This results in the formation of energetically stressed atomic compounds of carbon. Furthermore, the prepared carbonaceous mixture is a hydrophobic material, i.e. it does not absorb water and docs not combine with water (marginal wetting angle greater than 90°).

During the preparation of a carbonaceous mixture, chemical processing of the graphite-containing feedstock (natural flaked graphite or graphite in the form of powder) is carried out with halogen-oxygen compounds of the general formula MXOn, wherein: M is one of the chemical substances of the row: H, NH₄, Na, K; X is one of the chemical substances of the row: Cl, Br,I; and n = 1-4, with the formation of initiating complexes, capable as a result of photochemical, mechanical, thermochemical, sonochemical or direct chemical action, of exothermal explosive-like decomposition with the subsequent initiation of an autocatalytic process of decomposition of the compound. Initiating complexes are introduced into the interlayer space of graphite, their explosive-like decomposition is initiated and there is not only a break of van der Waals links but also of covalent links, which results in the formation of a carbonaceous mixture. When the process is carried out under conditions close to normal atmospheric pressure (760 mmHg) and room temperature (20 DEG C), the formation of carbon nanotubes takes place in a relationship sufficient for the effective removal of chemical pollutants (not less than 10%).

The process of conversion of graphite (the break of van der Waals links) is carried out under the action of microexplosions of explosive substances introduced into the interlayer spaces of the graphite, in this case the aforesaid initiating complexes. The explosive substance is in the interlayer space at a molecular level and is initiated in a chemical way to an explosion. As a result of the energy freed by the microexplosion, not only a break of van der Waals links occurs, but there is also a break of interatomic links with the formation of not only nanotubes, but also free radicals C, C₂, C₃, C₄, C₅ and radicals in the form of hexagonals (one or several) with added thereto radicals of the type C, C₂, C₃, C₄, and C₅, which ensure in combination a high reaction capability of the obtained carbonaceous mixture.

The carbonaceous mixture is a substance in the form of fluff and/or dust with a 99.4% weight content of carbon, with a bulk density of from 0.002 g/cm³ to 0.01 g/cm³, pore size to 40 µm.

The microstructure of the carbonaceous mixture is formed by granules which have a stretched fiber structure (similar to a shredded bast) on its surface with a diameter of the fibers being about single-digit micrometers and even fractions thereof.

The process of conversion is carried out in any container (vessel, etc.), including the possible case without access of oxygen.

The installation for the production of the carbonaceous mixture is compact and does not contain a lot of metal. As a result, a specific feature of the method for removing chemical pollutants is the possibility of preparing the carbonaceous mixture not only under industry conditions, but also directly at the place of use of preliminarily prepared feedstock.

Preparation of the feedstock for preparing the carbonaceous mixture is carried out in a centralized manner at the place where it is stored and does not require special conditions, energy and labor expenditures. Then it may be conveyed without packaging (like, for example, ordinary earth) or in containers in the necessary amounts together with generating devices to the places of their use or storage (sea, air or ground emergency [life-saving] or liquidation bases, concrete objects). Wherein the carbonaceous mixture in a self-generation modification may be packaged in individual cases (of the fire extinguisher type), may be formed into briquettes and granules, which have the necessary weight characteristics for their remote application onto the objects to be acted on.

Application of the carbonaceous mixture onto the places of collection of oil and petroleum products and onto other objects may be carried out by spraying from the air, from the surface or from under the surface of water, or by preliminarily applying the material onto the place of a possible spill.

The physicochemical and technological properties of the carbonaceous mixture make it possible to rapidly and effectively adapt it to concrete conditions of use and to machinery and technologies existing for these purposes (aviation, sea, automobile transport, etc.), or to universalize it.

The bulk density of the carbonaceous mixture is substantially less than the bulk density of the feedstock. Furthermore, the absorbing capability of the carbonaceous mixture in respect to crude oil is not less than 1 to 50, i.e. one gram of the carbonaceous mixture adds thereto at least 50 grams of hydrocarbon compounds. Thus, the possibility is provided for processing huge contaminated surfaces of the sea for one voyage of the ship, without having to reload it. Wherein the carbonaceous mixture reliably holds the collected petroleum products, hydrocarbon compounds and other chemical pollutants, remaining sufficiently dry, which makes it possible to use the least expensive dry-cargo craft for collection of oil and petroleum products.

Examples of realization of the method.

### Example 1

When the method for removing oil and petroleum products is being carried out, the discharge of the carbonaceous mixture may be accomplished directly into the body of the water under the contaminated surface or directly onto the surface, and due to the small specific weight it easily rises to and is held on the surface, absorbing therein or adding thereto hydrocarbon pollutants, for example, oil.

A possible device for feeding the carbonaceous mixture into the mass of water is a device consisting of racks with sprayer heads for supplying a water-air-powder composition into the water, a unit for mixing gas (air) with powder (fluidized powders) and feeding it into the mixing unit with pressure (line) water. A screw centrifugal pump may be used as the source of pressure (line) water. A compressor (blower) is used as the source of air with the pressure necessary for fluidizing the powder.

When the finely dispersed powder (carbonaceous mixture) is fed to a depth of 0.8-1.0 meter from a carrier moving at a rate of 2 meters per second, 15 grams of powder add to 1 5 kg of oil, wherein the powder relatively rapidly and uniformly mixes with the water and during the period of settling tends to intensively rise. After about one minute has passed, 98% of the powder rises to the surface of the water.

The carbonaceous mixture added to the hydrocarbon pollutants, for example, to oil, may be easily collected from the surface of the water by known methods.

The carbonaceous mixture is also easily removed together with oil and other hydrocarbon pollutants from the surface of land with use of cleaning (gathering) machines or after preliminarily washing off the saturated carbonaceous mixture with water into an open canal or any other body of water with subsequent collection like collection from the surface of water.

The oil or other hydrocarbon pollutants thus collected remain suitable for further use in accordance with their direct purpose, and the pressed out carbonaceous mixture is suitable for repeated use, which is very important in the case of natural calamities and ecological catastrophes related to the spilling of oil, petroleum products, other harmful hydrocarbon compounds, especially when they fall into water.

In order to prevent the further propagation of an oil spot on a water surface, a floating barrier may be used, this barrier being a cloth cylinder with a "filling" of the carbonaceous mixture. The floating barrier eliminates the flow of the iridescent (oil) film downstream, wherein accumulation of a film of petroleum products before the floating barrier will not occur, which confirms the process of the petroleum products being absorbed by the carbonaceous mixture, as exemplified by purification of the water of small Moscow rivers (Table 1).

### Example 2

The method for removing chemical pollutants used for purification of industrial discharges has shown very good results in respect to the removal of both anions and cations.

Tests which were carried out and the results of chemical analysis have shown that the carbonaceous mixture has excellent properties in respect to a significant number of organic and inorganic chemical compounds. For example, it absorbs (with a relatively small thickness of the fillers, about 10 cm) petroleum products and ether soluble substances from solutions to levels lower than prescribed maximum permissible concentrations (the degree of purification is more than 1000 times). The carbonaceous mixture has also shown high effectiveness for the removal of many cations, including copper (by 30 times), chromium (+6) (by 5 times), iron (by 3 times), ammonium (by 2-3 times), vanadium (by 5 times), manganese (by 2 times), phosphates (by 35 times), fluorides (by 5 times), nitrates (by 3 times). Furthermore, the carbonaceous mixture works as a sedimentation filter - the concentration of suspended particles decreases by more than 100 times.

Data on the content of chemical pollutants prior to purification and after one purification with the indicated method are shown in Table 2.

### Example 3.

The method for removing chemical pollutants may be used for purification of drinking tap, well and artesian well water.

A filter with an 8 cm thickness of the filtering layer of the carbonaceous mixture was used for purifying drinking water. Wherein high effectiveness was achieved in the majority of the most important rated indices. In particular, a high degree of removal of sulphates, sulfides, fluorides, chlorides, nitrates, ammonium nitrogen, iron, zinc, copper, aluminum, manganese, lead, molybdenum, free chlorine was achieved. Reduction of turbidity by 25-60 times, reduction of the amount of suspended particles by 10-30 times are observed.

Comparative data on the state of the water after purification with the aid of a "Barrier" filter and with the aid of the carbonaceous mixture are presented in Table 3, and comparative data on the purification of drinking water taken from different sources are presented in Table 4.

### Example 4.

Tests of the method in vitro were carried out in the Laboratory of Hemodialysis and Plasmapheresis of the Russian Cardiological Scientific-and-Industrial Complex of the Ministry of Health of the Russian Federation. The tests were carried out with use of a roller pump of the "Gambro" firm and a slot type nozzle. Patients' blood was preliminarily divided on a plasma separator PF-0 5, i e the plasma exchange procedure was carried out. The separated plasma was then passed through the carbonaceous mixture.

Among the 13 analyzed parameters, significant changes were observed in respect to reduction of the level of uric acid (the level of reduction exceeded 50%) and a tendency towards reduction of the level of creatinine (a metabolite of nitrogenous exchange) was noted.

### Example 5

Clinical tests of use of the method for local treatment of wounds have shown the following.

Since the carbonaceous mixture is a powder which easily penetrates through a layer of medical gauze, in order to prevent the powder falling on a granulating wound, sticking of the powder and its impregnation into the wound, the following bandages were used, which comprise a layer of synthetic nonwoven temporary Dermasafe wound coating, which is formed by thin, porous sterile napkins with a composition of: viscose - 66%, polyester - 34%, or two-three layers of medical gauze and 1-2 layers of porous paper.

The bandages are envelopes of rectangular shape having dimensions 6x8 or 5x6 cm, inside which is the carbonaceous mixture. In order to check the effectiveness of the bandages being tested in respect to their affect on the bacterial dissemination of wounds, inoculations were carried out to determine the number of microbe bodies on the surface of the wound before and after use of the sorbing bandages. The tests showed a significant reduction of the pus secreted from the wound after use of the sorbing bandages.

**Table 1**

| Date of carrying out analysis | Place where analysis was carried out | Components being determined | Method of analysis | Result of CCA mg/l | |
|---|---|---|---|---|---|
| | | | | before barrier | after barrier |
| 09.12.99 | Waste waters (Marinsky Park) | Floating petroleum products | IR | 0.12 | 0.010 |
| 09.12.99 | Nischenka River | Floating petroleum products | IR | 0.34 | 0.035 |
| 09.12.99 | Chura River | Floating petroleum products | IR | 0.4 | 0.041 |
| 09.12.99 | Tarakanovka River | Floating petroleum products | IR | 0.78 | 0.050 |
| 11.01.00 | Chura River | Floating petroleum products | IR | 2.7 | 0.18 |
| 11.01.00 | Waste waters (Butovo) | Floating petroleum products | IR | 5.4 | 0.96 |
| 25.02.00 | Waste waters OAO "Neftprodukty" | Phenols | chromat. | 0.11 | <0.01 |
| | | Petroleum products | IR | 86.6 | 0.05 |
| | | Benzopyrene | chromat. | 0.8 | <0.005 |
| | | Hydroquinone | chromat. | 2.5 | 0.5 |
| | | Phenolcarboxylic acid | chromat. | 63 | 11 |

**Table 2.**

| No. | Name of compound | Weight fraction of component in samples, (mg/l) | |
|---|---|---|---|
| | | Before purification | After 1st purification |
| 1 | Caproic acid | 351 | 191 |
| 2 | Tetrahydrothiophen | 2.1 | 1.7 |
| 3 | Isothiazole | 10.9 | 5.0 |
| 4 | 2,3-Dimethyl-1,4-hexadiene | 0.8 | 0.2 |
| 5 | Isovaleric acid | 5.1 | 1.4 |
| 6 | Valeric acid | 74.9 | 39.6 |
| 7 | Enanthic acid | 112 | 82 |
| 8 | Caprylic acid + Benzoic acid | Σ 55.5 | Σ 43.8 |
| 9 | 2-Ethylenehexanoic acid | 5.2 | 0 |
| 10 | β-Propylacrylic acid | 2.9 | 0 |
| 11 | Phenylacetic acid | 16.3 | 9.6 |
| 12 | Phenobarbital metabolite | 3.2 | 0 |
| 13 | 1-Methyl phenyl cyclopropane | 3.0 | 0 |
| 14 | Cyclohexanacetic acid | 3.2 | 2.6 |
| 15 | Terephthalic anhydride | 20.6 | 6.8 |
| 16 | Phenol | 49.3 | 14.1 |
| 17 | Hydrocinnamic acid | 14.1 | 0.3 |
| 18 | Caprylic acid | 9.2 | 7.8 |
| 19 | 2,3-Dimethylquinoxaline | 5.3 | 1.5 |
| 20 | N,N-Dimethylformamide | 42.6 | 14.9 |
| 21 | Cyclopropyl benzene | 3.8 | 0.4 |
| 22 | α-Phenylbenzyl alcohol | 3.8 | 0 |
| 23 | Cyclohexanol | 294 | 203 |
| 24 | Bi | 0.043 | 0.028 |
| 25 | Ni | 0.96 | 0.36 |
| 26 | Al | 0.61 | 0.38 |
| 27 | Na | 450 | 380 |
| 28 | Cr | 2.4 | 0.55 |
| 29 | Ca | 42.4 | 33.0 |
| 30 | Co | 0.052 | 0.012 |
| 31 | Re | 2.4 | 0.46 |
| 32 | Hg | 0.00066 | 0.00042 |
| 33 | Phosphate-ion | 25.0 | 5.8 |
| 34 | Nitrate-ion | 0.11 | <0.1 |
| 35 | As | 0.018 | 0.012 |
| 36 | Sb | 0.01 | <0.005 |

**Table 3**

| Components being determined | Initial water (Ramenskoe city water supply line) | Result of analysis (CCA), mg/l | |
|---|---|---|---|
| | | After filter "Barrier" (U.S A.) | After filter of carbonaceous mixture |
| Chromaticity, degree | 28 | 23 | 4 |
| Suspended substances | 79 | 22 | 3 |
| Turbidity, EMF | 117 | 32 | 2 |
| Iron, general | 8.75 | 1.87 | 0.01 |
| Ammonium nitrogen | 0.52 | 0.18 | 0 |
| Sulfides | 0.008 | 0.004 | 0.002 |
| Fluorides | 1.03 | 0.95 | 0.87 |
| Phosphates | 0.14 | 0.12 | 0.08 |

**Table 4**

| Components being determined | PDK | Well Orekho-Zuevo city | | Well Rasskazovka village | | Water line Ramenskoe city | |
|---|---|---|---|---|---|---|---|
| | mg/l | Initial water, mg/l | After filter, mg/l | Initial water, mg/l | After filter, mg/l | Initial water, mg/l | After filter, mg/l |
| Hardness, general | 6-8 | 4.68 | 4.00 | 5.6 | 5.4 | 5.58 | 5.28 |
| Nitrates | 45 | 1.1 | 0.8 | 21 | 15.8 | 2.5 | 2.0 |
| Sulfates | 500 | 1.5 | 0 | 56 | 44 | 30 | 20 |
| Sulfides | 0.003 | 0.001 | 0 | 0.004 | 0.001 | 0.008 | 0.002 |
| Ammonium nitrogen | 2.5 | 0 | 0 | 2.7 | 0.48 | 4.4 | 0.83 |
| Chromaticity, degrees | 20 | 8 | 1.5 | 10 | 1.8 | 28 | 4.0 |
| Turbidity, EMF | 2.6 | 0.6 | 0.02 | 1.25 | 0.06 | 117 | 2.0 |
| Suspended substances | 15 | 1.0 | 0.1 | 10 | 1.0 | 79 | 3.0 |
| Oxidizability, perm. | 5.0 | 1.2 | 0.5 | 3.2 | 1.0 | 3.4 | 2.0 |
| Fluorides | 1.5 | 0.2 | 0 | 0.29 | 0.02 | 1.03 | 0.87 |
| Phosphates | 3.5 | 0 | 0 | 0.80 | 0.31 | 0.14 | 0.08 |
| Manganese | 0.1 | 0.03 | 0.01 | 0 | 0 | 0.07 | 0.012 |
| Iron, general | 0,3 | 0.7 | 0 | 5.21 | 0.01 | 8.75 | 0.01 |
| Iron org. (humates) | - | 0 | 0 | 0.28 | 0 | 1.36 | 0.03 |
| Copper | 1.0 | 0 | 0 | 0.01 | 0 | 0.04 | 0 |
| Aluminum | 0.5 | 0 | 0 | 0.03 | 0 | 2.3 | 0.48 |
| Lead | 0.03 | 0 | 0 | 0 | 0 | 0.01 | 0.007 |
| Zinc | 5.0 | 0.17 | 0.05 | 0 | 0 | 0 | 0 |
| Chlorine, resid. free. | 0.3-0.5 | 0.06 | 0 | 0 | 0 | 3.00 | 0.03 |
| Mineralization | 1000 | 210 | 170 | 340 | 250 | 350 | 260 |
| Chloride | 350 | 2.9 | 2.7 | 17.5 | 16.6 | 6.8 | 6.5 |
| Molybedenum | 0.25 | 0 | 0 | 0 | 0 | 3.5 | 0.7 |

## Claims

1. A method for removing chemical pollutants, comprising preparing a carbonaceous mixture of a graphite-containing feedstock, placing the carbonaceous mixture in a contaminated medium and collecting the carbonaceous mixture saturated with pollutants, **characterized in that** placing the carbonaceous mixture in the contaminated medium is carried out by dispersing onto a surface and/or into a liquid and/or by placing on a surface and/or by passing a liquid or a gas through a filter, and a mixture of expanded graphite and carbonaceous nanocrystals is used as the carbonaceous mixture, wherein the content of the carbonaceous nanocrystals in the mixture is not less than 10%, and **characterized in that** the nanocrystals are nanotubes having a size of 1-10 nm, with added thereto free C, C₂, C₃, C₄, C₅ radicals, and/or radicals in the form of one or several connected hexagonals and/or hexagonals with added thereto radicals of the type C, C₂, C₃, C₄ and C₅.

2. A method for removing chemical pollutants according to claim 1, **characterized in that** preparing the carbonaceous mixture is carried out by chemical processing of the graphite-containing feedstock with at least one halogen-oxygen compound having the formula MXOₙ, where M is one of the chemical substances of the row: H, NH₄, Na, K; X is one of the chemical substances of the row: Cl, Br, I; and n = 1-4, and subsequent external action resulting in exothermal explosive-like decomposition of the processed graphite-containing stock with subsequent initiation of an autocatalytic breakdown process, wherein application of the action is carried out at normal pressure and room temperature.

3. A method for removing chemical pollutants according to claim 2, **characterized in that** the external action is carried out by photochemical or electrochemical or mechanical or thermochemical or sonochemical or direct chemical action.

4. A method for removing chemical pollutants according to any one of claims 1-3, **characterized in that** either natural flaked graphite or graphite in the form of powder is used as the graphite-containing feedstock.

5. A method for removing chemical pollutants according to any one of claims 1-3, **characterized in that** the weight ratio of the graphite-containing feedstock to the halogen-oxygen compound is equal to 21.

6. A method for removing chemical pollutants according to any one of claims 1-5, **characterized in that** after collecting the carbonaceous mixture of expanded graphite and carbonaceous nanocrystals which is saturated with chemical pollutants, the collected hydrocarbon pollutants are removed from the carbonaceous mixture by the compression method.

7. A method for removing chemical pollutants according to claim 6, **characterized in that** after removal of the chemical pollutants, the carbonaceous mixture of expanded graphite and carbonaceous nanocrystals are used again.

8. A method for removing chemical pollutants according to claim 6, **characterized in that** the squeezing is accomplished with a press.

9. A method for removing chemical pollutants according to any one of claims 1-8, **characterized in that** it is used for collecting oil and petroleum products from the surface of water, wherein preparation of the carbonaceous mixture of expanded graphite and carbonaceous nanocrystals is carried out on the ship-collector of the oil or on shore, and the placing of the carbonaceous mixture of expanded graphite and carbonaceous nanocrystals on the surface of water is carried out by dispersal into the body of the water and/or onto the surface of the water and/or by the placement of floating barriers on the surface of the water.

10. A method for removing chemical pollutants according to any one of claims 1-8, **characterized in that** it is used for filtering drinking water comprising chemical pollutants, including hydrocarbon compounds, with the use of a filter made of a carbonaceous mixture of expanded graphite and carbonaceous nanocrystals.

11. A method for removing chemical pollutants according to any one of claims 1-8, **characterized in that** it is used to purify industrial discharges.

12. A method for removing chemical pollutants according to any one of claims 1-8, **characterized in that** it is used for the removal of light fractions of petroleum products or gaseous condensate from free spaces of storage reservoirs.

13. A method for removing chemical pollutants according to any one of claims 1-8, **characterized in that** it is used for neutralization of exhaust gases of internal combustion engines as the base of a matrix of a neutralizer of exhaust gases.

14. A method for removing chemical pollutants according to any one of claims 1-8, **characterized in that** it is used as a filter for cigarettes for filtration of cigarette smoke.

15. A method for removing chemical pollutants according to any one of claims 1-8, **characterized in that** it is used for purification of blood plasma.

16. A method for removing chemical pollutants according to any one of claims 1-9, **characterized in that** it is used as a sorbent for external application in cases of skin integument diseases which are **characterized by** discharge, where placement on the skin integument is accomplished by the application of a bandage with a carbonaceous mixture.

17. A method for removing chemical pollutants according to claim 16, **characterized in that** it is used for treatment of burns and purulent wounds.

## Patentansprüche

1. Verfahren zur Entfernung chemischer Verunreinigungen, umfassend das Herstellen einer kohlenstoffhaltigen Mischung eines graphithaltigen Ausgangsmaterials, Eingeben der kohlenstoffhaltigen Mischung in ein kontaminiertes Medium und Auffangen der mit Verunreinigungen gesättigten kohlenstoffhaltigen Mischung, **dadurch gekennzeichnet, dass** das Eingeben der kohlenstoffhaltigen Mischung in das verunreinigte Medium durch Dispergieren auf eine Oberfläche und/oder in eine Flüssigkeit und/oder durch Aufgeben auf eine Oberfläche und/oder durch Hindurchführen einer Flüssigkeit oder eines Gases durch ein Filter erfolgt und eine Mischung von Blähgraphit und kohlenstoffhaltigen Nanokristallen als kohlenstoffhaltige Mischung verwendet wird, wobei der Gehalt an kohlenstoffhaltigen Nanokristallen in der Mischung nicht weniger als 10 % beträgt und **dadurch gekennzeichnet, dass** die Nanokristalle Nanoröhren sind, die eine Größe von 1-10 nm aufweisen, mit angelagerten freien C-, C₂-, C₃-, C₄-, C₅-Radikalen und/oder Radikalen in Form eines oder mehrerer verbundener Hexagonale und/oder Hexagonale mit angelagerten Radikalen des Typs C, C₂, C₃, C₄ und C₅.

2. Verfahren für das Entfernen chemischer Verunreinigungen nach Anspruch 1, **dadurch gekennzeichnet, dass** das Herstellen der kohlenstoffhaltigen Mischung durch chemisches Verarbeiten des graphithaltigen Ausgangsmaterials mit mindestens einer Halogensauerstoffverbindung, die die Formel MXOₙ aufweist, wobei M eine der chemischen Substanzen der Reihe: H, NH₄, Na, K ist; X eine der chemischen Substanzen der Reihe: Cl, Br, I ist; und n = 1-4 ist, und durch einen darauffolgenden externen Arbeitsgang erfolgt, der zur exothermen explosionsähnlichen Zersetzung des verarbeiteten graphithaltigen Ausgangsmaterials mit darauffolgendem Initiieren eines autokatalytischen Abbauvorgangs führt, wobei die Ausführung des Arbeitsgangs bei normalem Druck und normaler Raumtemperatur erfolgt.

3. Verfahren zur Entfernung chemischer Verunreinigungen nach Anspruch 2, **dadurch gekennzeichnet, dass** der externe Arbeitsgang durch fotochemischen oder elektrochemischen oder mechanischen oder thermochemischen oder sonochemischen oder direkten chemischen Arbeitsgang erfolgt.

4. Verfahren zur Entfernung chemischer Verunreinigungen nach einem der Ansprüche 1-3, **dadurch gekennzeichnet, dass** entweder natürlicher flockenförmiger Graphit oder Graphit in Form von Pulver als graphithaltiges Ausgangsmaterial verwendet wird.

5. Verfahren zur Entfernung chemischer Verunreinigungen nach einem der Ansprüche 1-3, **dadurch gekennzeichnet, dass** das Gewichtsverhältnis des graphithaltigen Ausgangsmaterials zur Halogensauerstoffverbindung gleich 21 ist.

6. Verfahren zur Entfernung chemischer Verunreinigungen nach einem der Ansprüche 1-5, **dadurch gekennzeichnet, dass** nach dem Auffangen der kohlenstoffhaltigen Mischung von Blähgraphit und kohlenstoffhaltigen Nanokristallen, die mit chemischen Verunreinigungen gesättigt ist, die aufgefangenen Kohlenwasserstoffverunreinigungen aus der kohlenstoffhaltigen Mischung durch das Kompressionsverfahren entfernt werden.

7. Verfahren zur Entfernung chemischer Verunreinigungen nach Anspruch 6, **dadurch gekennzeichnet, dass** nach dem Entfernen der chemischen Verunreinigungen die kohlenstoffhaltige Mischung von Blähgraphit und kohlenstoffhaltigen Nanokristallen wieder verwendet wird.

8. Verfahren zur Entfernung chemischer Verunreinigungen nach Anspruch 6, **dadurch gekennzeichnet, dass** das Zusammendrücken mit einer Presse erreicht wird.

9. Verfahren zur Entfernung chemischer Verunreinigungen nach einem der Ansprüche 1-8, **dadurch gekennzeichnet, dass** es zum Auffangen von Öl- und Erdölprodukten von der Oberfläche von Wasser verwendet wird, wobei das Herstellen der kohlenstoffhaltigen Mischung von Blähgraphit und kohlenstoffhaltigen Nanokristallen auf dem Schiffskollektor für das Öl oder an Land erfolgt und das Aussetzen der kohlenstoffhaltigen Mischung von Blähgraphit und kohlenstoffhaltigen Nanokristallen auf die Oberfläche von Wasser durch Dispergieren in den Wasserkörper und/oder auf die Oberfläche des Wassers und/oder durch Positionieren von schwimmenden Barrieren auf die Oberfläche des Wassers erfolgt.

10. Verfahren zur Entfernung chemischer Verunreinigungen nach einem der Ansprüche 1-8, **dadurch gekennzeichnet, dass** es zum Filtrieren von Trinkwasser, das chemische Verunreinigungen, einschließlich Kohlenwasserstoffverbindungen, umfasst unter Zuhilfenahme eines Filters verwendet wird, das aus einer kohlenstoffhaltigen Mischung von Blähgraphit und kohlenstoffhaltigen Nanokristallen besteht.

11. Verfahren zur Entfernung chemischer Verunreinigungen nach einem der Ansprüche 1-8, **dadurch gekennzeichnet, dass** es zum Reinigen industrieller Einleitungen angewendet wird.

12. Verfahren zur Entfernung chemischer Verunreinigungen nach einem der Ansprüche 1-8, **dadurch gekennzeichnet, dass** es zum Entfernen leichter Fraktionen von Erdölprodukten oder gasförmigem Kondensat aus den Leerräumen von Speicherreservoirs angewendet wird.

13. Verfahren zur Entfernung chemischer Verunreinigungen nach einem der Ansprüche 1-8, **dadurch gekennzeichnet, dass** es zum Neutralisieren von Abgasen von Verbrennungsmotoren als Basis einer Matrix eines Neutralisators für Abgase angewendet wird.

14. Verfahren zur Entfernung chemischer Verunreinigungen nach einem der Ansprüche 1-8, **dadurch gekennzeichnet, dass** es als Filter für Zigaretten für das Filtern von Zigarettenrauch angewendet wird.

15. Verfahren zur Entfernung chemischer Verunreinigungen nach einem der Ansprüche 1-8, **dadurch gekennzeichnet, dass** es zum Reinigen von Blutplasma angewendet wird.

16. Verfahren zur Entfernung chemischer Verunreinigungen nach einem der Ansprüche 1-9, **dadurch gekennzeichnet, dass** es als Sorbenz für die äußere Anwendung in Fällen von Hautintegumentkrankheiten verwendet wird, die durch Absonderung **gekennzeichnet** sind, wobei das Aufbringen auf das Hautintegument durch Anbringen einer Binde mit einer kohlenstoffhaltigen Mischung erreicht wird.

17. Verfahren zur Entfernung chemischer Verunreinigungen nach Anspruch 16, **dadurch gekennzeichnet, dass** es zum Behandeln von Verbrennungen und eitrigen Wunden angewendet wird.

## Revendications

1. Procédé d'élimination de polluants chimiques, comprenant la préparation d'un mélange carboné d'une charge d'alimentation contenant du graphite, le placement du mélange carboné dans un milieu contaminé et de récupération du mélange carboné saturé avec les polluants, **caractérisé en ce que** le placement du mélange carboné dans le milieu contaminé est réalisé par une dispersion sur une surface et/ou dans un liquide et/ou par un placement sur une surface et/ou en faisant passer un liquide ou un gaz à travers un filtre, et un mélange de graphite expansé et de nanocristaux carbonés est utilisé en tant que mélange carboné, dans lequel la teneur en nanocristaux carbonés dans le mélange n'est pas inférieure à 10%, et **caractérisé en ce que** les nanocristaux sont des nanotubes possédant une taille de 1-10 nm, avec ajoutés à ceux-ci des radicaux libres C, C₂, C₃, C₄, C₅, et/ou des radicaux sous la forme d'un ou de plusieurs systèmes hexagonaux reliés et/ou des systèmes hexagonaux avec ajoutés à ceux-ci des radicaux du type C, C₂, C₃, C₄ et C₅.

2. Procédé d'élimination de polluants chimiques selon la revendication 1, **caractérisé en ce que** la préparation du mélange carboné est réalisée par un traitement chimique de la charge d'alimentation contenant du graphite avec au moins un composé d'halogène-oxygène présentant la formule MXOₙ, où M est une des substances chimiques de la ligne: H, NH₄, Na, K; X est une des substances chimiques de la ligne: Cl, Br, I; et n = 1-4, et une action externe subséquente conduisant à une décomposition exothermique de type explosive de la charge contenant du graphite traitée avec une initiation subséquente d'un procédé de rupture auto-catalytique, dans lequel l'application de l'action est réalisée à une pression normale et une température ambiante.

3. Procédé d'élimination de polluants chimiques selon la revendication 2, **caractérisé en ce que** l'action externe est réalisée par une action photochimique ou électrochimique ou mécanique ou thermochimique ou sonochimique ou chimique directe.

4. Procédé d'élimination de polluants chimiques selon l'une quelconque des revendications 1-3, **caractérisé en ce que** soit du graphite naturel en flocons, soit du graphite sous la forme d'une poudre est utilisé en tant que charge d'alimentation contenant du graphite.

5. Procédé d'élimination de polluants chimiques selon l'une quelconque des revendications 1-3, **caractérisé en ce que** le rapport en poids de la charge d'alimentation contenant du graphite sur le composé d'halogène-oxygène est égal à 21.

6. Procédé d'élimination de polluants chimiques selon l'une quelconque des revendications 1-5, **caractérisé en ce que**, après la récupération du mélange carboné de graphite expansé et de nanocristaux carbonés qui est saturé avec les polluants chimiques, les polluants hydrocarbures récupérés sont éliminés à partir du mélange carboné par le procédé de compression.

7. Procédé d'élimination de polluants chimiques selon la revendication 6, **caractérisé en ce que**, après l'élimination des polluants chimiques, le mélange carboné de graphite expansé et de nanocristaux carbonés est utilisé à nouveau.

8. Procédé d'élimination de polluants chimiques selon la revendication 6, **caractérisé en ce que** la compression est accomplie avec une presse.

9. Procédé d'élimination de polluants chimiques selon l'une quelconque des revendications 1-8, **caractérisé en ce qu'**il est employé pour récupérer du pétrole et des produits pétroliers à partir de la surface de l'eau, où la préparation du mélange carboné de graphite expansé et de nanocristaux carbonés est réalisée sur le bateau-récupérateur du pétrole ou sur le rivage, et le placement du mélange carboné de graphite expansé et de nanocristaux carbonés sur la surface de l'eau est réalisé par une dispersion dans la masse de l'eau et/ou sur la surface de l'eau et/ou par le placement de barrières flottantes sur la surface de l'eau.

10. Procédé d'élimination de polluants chimiques selon l'une quelconque des revendications 1-8, **caractérisé en ce qu'**il est employé pour filtrer de l'eau potable comprenant des polluants chimiques, incluant des composés hydrocarbures, avec l'utilisation d'un filtre composé d'un mélange carboné de graphite expansé et de nanocristaux carbonés.

11. Procédé d'élimination de polluants chimiques selon l'une quelconque des revendications 1-8, **caractérisé en ce qu'**il est employé pour purifier des rejets industriels.

12. Procédé d'élimination de polluants chimiques selon l'une quelconque des revendications 1-8, **caractérisé en ce qu'**il est employé pour l'élimination de fractions légères de produits pétroliers ou d'un produit de condensation gazeux provenant d'espaces libres de réservoirs de stockage.

13. Procédé d'élimination de polluants chimiques selon l'une quelconque des revendications 1-8, **caractérisé en ce qu'**il est employé pour la neutralisation de gaz d'échappement de moteurs à combustion interne comme la base d'une matrice d'un agent neutralisant les gaz d'échappement.

14. Procédé d'élimination de polluants chimiques selon l'une quelconque des revendications 1-8, **caractérisé en ce qu'**il est employé en tant que filtre pour des cigarettes pour la filtration de la fumée de cigarette.

15. Procédé d'élimination de polluants chimiques selon l'une quelconque des revendications 1-8, **caractérisé en ce qu'**il est employé pour la purification de plasma sanguin.

16. Procédé d'élimination de polluants chimiques selon l'une quelconque des revendications 1-9, **caractérisé en ce qu'**il est employé en tant que sorbant pour une application externe dans des cas de maladies du tégument dermique qui sont **caractérisées par** une suppuration, où le placement sur le tégument dermique est accompli par l'application d'un bandage avec un mélange carboné.

17. Procédé d'élimination de polluants chimiques selon la revendication 16, **caractérisé en ce qu'**il est employé pour le traitement de brûlures et de plaies purulentes.
